# EUROPEAN PATENT SPECIFICATION

(11) **EP 4 155 881 B1**
(45) Date of publication and mention of the grant of the patent: **20.11.2024**
(21) Application number: 22192031.7
(22) Date of filing: 24.08.2022
(51) Int. Cl.: G06F 3/02, H01H 13/83, G06F 1/16, G06F 1/3215, G06F 1/3234, G06F 1/3287, G09G 5/00

(54) **KEYCAP WITH PHOTOLUMINESCENT MATERIAL**
TASTENKAPPE MIT PHOTOLUMINESZENTEM MATERIAL
CAPUCHON DE TOUCHE AVEC MATÉRIAU PHOTOLUMINESCENT

(30) Priority: 25.09.2021 US 202117485338
(43) Date of publication of application: 29.03.2023
(73) Proprietor: INTEL Corporation, Santa Clara, CA 95054 (US)
(72) Inventor: ISMAIL SHERIF, Khader Shareef, 560008 Bengaluru, Karnataka (IN); SUNDARAM, Arvind, 560102 Bangalore (IN); CHANDRAN, Rajesh, 560016 Bangalore (IN); RAMAN, Charuhasini Sunder, 560103 Bangalore (IN)
(74) Representative: 2SPL Patentanwälte PartG mbB

(56) References cited:
- EP-A1- 3 477 437
- US-A1- 2004 062 033
- US-A1- 2010 089 729
- US-A1- 2012 292 169

## Description

### TECHNICAL FIELD

This disclosure relates in general to the field of computing, and more particularly, to a keycap with photoluminescent material.

### BACKGROUND

Emerging trends in systems place increasing demands on the system. One current trend is the mobile nature of electronic devices, especially laptops where the trend is lighter and thinner devices. Due to the mobile nature of the electronic devices, some of the devices are used in low light conditions where it can be difficult to see the keys on a keyboard. Publications US 2010089729 A1, US 2004062033 A1, US 2012292169 A1, and EP 3477437 A1 disclose various approaches to illuminate keys of keyboards.

### SUMMARY

According to the claimed invention, there is provided an electronic device and a method as set out in independent claims 1 and 8, respectively. The dependent claims define advantageous embodiments.

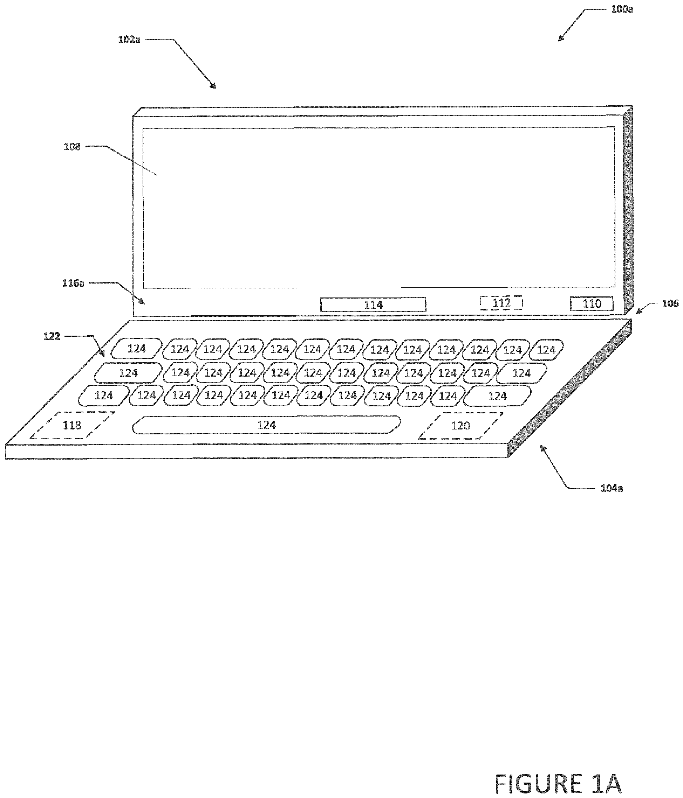

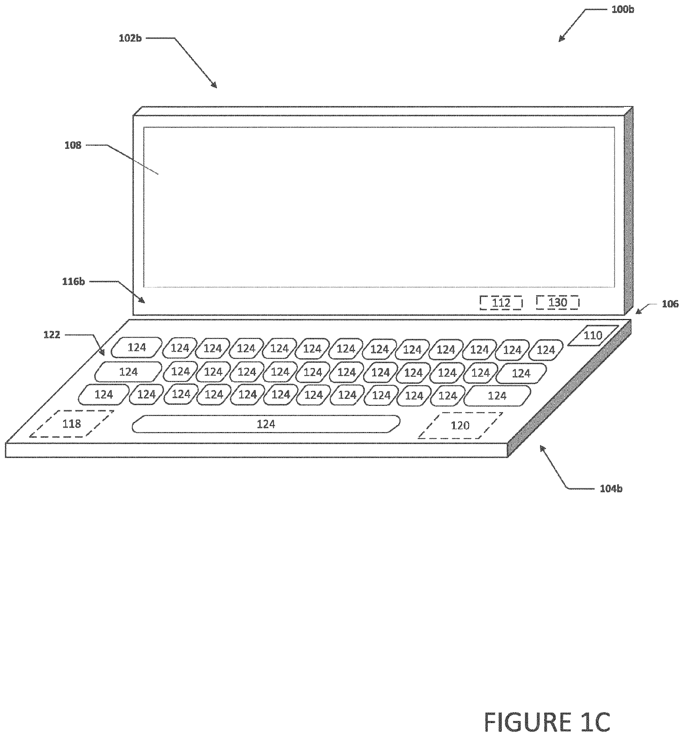

It is noted that the claimed invention relates to the electronic device and method described in relation to FIGURES 1C-3B and 8A-10. Accordingly, any reference in the description to an embodiment or example relating to FIGURES 1A-1B and 4-7B should be understood as a reference to an example that is provided as useful for understanding the claimed invention but without being part of the claimed invention.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURES 1A-1B are a simplified block diagrams of a system to enable a keycap with photoluminescent material, in accordance with an embodiment of the present disclosure;
FIGURES 1C-1D are a simplified block diagrams of a system to enable a keycap with photoluminescent material, in accordance with an embodiment of the present disclosure;
FIGURE 2 is a simplified block diagram of a portion of a system to enable a keycap with photoluminescent material, in accordance with an embodiment of the present disclosure;
FIGURE 3A is a simplified block diagram of a portion of a system to enable a keycap with photoluminescent material, in accordance with an embodiment of the present disclosure;
FIGURE 3B is a simplified block diagram of a portion of a system to enable a keycap with photoluminescent material, in accordance with an embodiment of the present disclosure;
FIGURE 4 is a simplified block diagram of a system to enable a keycap with photoluminescent material, in accordance with an embodiment of the present disclosure;
FIGURE 5 is a simplified block diagram of a system to enable a keycap with photoluminescent material, in accordance with an embodiment of the present disclosure;
FIGURE 6 is a simplified block diagram of a system to enable a keycap with photoluminescent material, in accordance with an embodiment of the present disclosure;
FIGURES 7A and 7B are simplified block diagrams of a system to enable a keycap with photoluminescent material, in accordance with an embodiment of the present disclosure;
FIGURES 8A and 8B are simplified block diagrams of a system to enable a keycap with photoluminescent material, in accordance with an embodiment of the present disclosure;
FIGURE 9 is a simplified flowchart illustrating potential operations that may be associated with the system in accordance with an embodiment of the present disclosure; and
FIGURE 10 is a block diagram illustrating an example device that include a keycap with photoluminescent material, in accordance with an embodiment of the present disclosure.
The FIGURES of the drawings are not necessarily drawn to scale, as their dimensions can be varied considerably without departing from the scope of the present disclosure.

### DETAILED DESCRIPTION

### EXAMPLE EMBODIMENTS

The following detailed description sets forth examples of apparatuses, methods, and systems relating to enabling a keycap with photoluminescent material. Features such as structure(s), function(s), and/or characteristic(s), for example, are described with reference to one embodiment as a matter of convenience; various embodiments may be implemented with any suitable one or more of the described features.

In the following description, various aspects of the illustrative implementations will be described using terms commonly employed by those skilled in the art to convey the substance of their work to others skilled in the art. However, it will be apparent to those skilled in the art that the embodiments disclosed herein may be practiced with only some of the described aspects without departing from the scope of the claimed invention as defined by the claims. For purposes of explanation, specific numbers, materials, and configurations are set forth in order to provide a thorough understanding of the illustrative implementations. However, it will be apparent to one skilled in the art that the embodiments disclosed herein may be practiced without the specific details without departing from the scope of the claimed invention as defined by the claims. In other instances, well-known features are omitted or simplified in order not to obscure the illustrative implementations.

The terms "over," "under," "below," "between," and "on" as used herein refer to a relative position of one layer or component with respect to other layers or components. For example, one layer disposed over or under another layer may be directly in contact with the other layer or may have one or more intervening layers. Moreover, one layer disposed between two layers may be directly in contact with the two layers or may have one or more intervening layers. In contrast, a first layer "directly on" a second layer is in direct contact with that second layer. Similarly, unless explicitly stated otherwise, one feature disposed between two features may be in direct contact with the adjacent features or may have one or more intervening layers.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments described herein are, for example, capable of operation in other orientations than those illustrated or otherwise described herein.

In the following detailed description, reference is made to the accompanying drawings that form a part hereof wherein like numerals designate like parts throughout, and in which is shown, by way of illustration, embodiments that may be practiced. It is to be understood that other embodiments may be utilized and structural or logical changes may be made without departing from the scope of the present invention as defined by the claims. Therefore, the following detailed description is not to be taken in a limiting sense. For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). Reference to "one embodiment" or "an embodiment" in the present disclosure means that a particular feature, structure, or characteristic described in connection with the embodiment is included in at least one embodiment. The appearances of the phrase "in one embodiment" or "in an embodiment" are not necessarily all referring to the same embodiment. The appearances of the phrase "for example," "in an example," or "in some examples" are not necessarily all referring to the same example. The term "about" indicates a tolerance of twenty percent (20%). For example, about one (1) millimeter (mm) would include one (1) mm and ± 0.2 mm from one (1) mm. Similarly, terms indicating orientation of various elements, for example, "coplanar," "perpendicular," "orthogonal," "parallel," or any other angle between the elements generally refer to being within +/- 5-20% of a target value based on the context of a particular value as described herein or as known in the art.

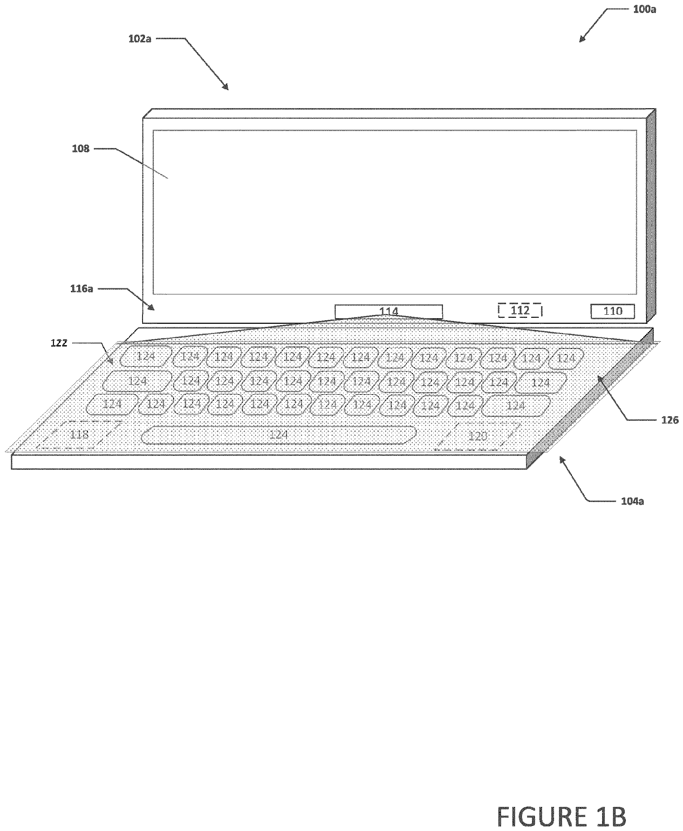

FIGURES 1A and 1B are block diagrams of an electronic device 100a that includes keycaps with photoluminescent material, in accordance with an embodiment of the present disclosure. In an example, the electronic device 100a can include a first housing 102a and a second housing 104a. The first housing 102a can be rotatably or pivotably coupled to the second housing 104a using a hinge 106. The electronic device 100a can be a laptop computer.

The first housing 102a can include a display 108, an ambient light sensor 110, a photoluminescent activation engine 112, and a light source 114. In an example, the first housing 102a can also include a bezel 116a around the display 108. In a specific example, the ambient light sensor 110 and the light source 114 can be part of and/or integrated into the bezel 116a.

The second housing 104a can include memory 118, one or more processors 120, and a keyboard 122. The keyboard 122 may be a QWERTY keyboard or some other type of keyboard. The keyboard 122 includes a plurality of keys 124. One or more of the plurality of keys 124 can have a keycap that includes photoluminescent material on at least a portion of the keycap.

The ambient light sensor 110 can be configured to measure the ambient light intensity that matches the human eye's response to light under a variety of lighting conditions. More specifically, the ambient light sensor 110 can be a photodetector that is used to detect the amount of ambient light present around the electronic device 100a and more specifically, around the keyboard 122. The term "ambient light" includes the available light in an environment around the electronic device. For example, natural ambient light can include sunlight and moonlight and artificial ambient light can include lamps, fireplaces, candles, string lights, etc.

When the ambient light sensor 110 detects that the amount of ambient light is below a threshold, the ambient light sensor 110 can send a signal to the photoluminescent activation engine 112 that the ambient light is below the threshold. The threshold can be a condition or amount of ambient light where a user may have difficulty seeing the keys 124 on the keyboard 122. In an example, the threshold is below about one hundred (100) lux and ranges therein (e.g., below about seventy-five (75) lux, below about fifty (50) lux, or below about twenty (20) lux), depending on design choice, design constraints, and the sensitivity of the user to see in low light conditions. In some examples, the threshold can be set and adjusted by the user. In response to the signal from the ambient light sensor 110 that the ambient light is below the threshold, the photoluminescent activation engine 112 can send a signal to activate the light source 114, as illustrated in FIGURE 1B. When the light source 114 is activated, the light source 114 will direct light energy 126 to one or more of the plurality of keys 124. The one or more of the plurality of keys 124 can include a material that absorbs the light energy 126 and then reimages the light energy back at a higher wavelength. More specifically, the one or more of the plurality of keys 124 can include a material that allows the energy absorbed by electrons of the material to be reemitted back at higher wavelength when the electrons of the material return to stable state. This allows one or more of the plurality of keys 124 to luminesce or become illuminated without the need for an LED backlight. Because the one or more of the plurality of keys 124 are not illuminated with an LED backlight, power can be saved while reducing the key stack height without compromising user experience. The wavelength of the light energy 126 depends on the material that absorbs the light energy 126 and then reimages the light energy back at a higher wavelength. For example, if the material is a quantum dot film, then the light energy 126 may be visible light (e.g., between about 380 nm (violet) to about 740 nm (red)), ultraviolet light, inferred red light, or some other wavelength, depending on the type of quantum dot film.

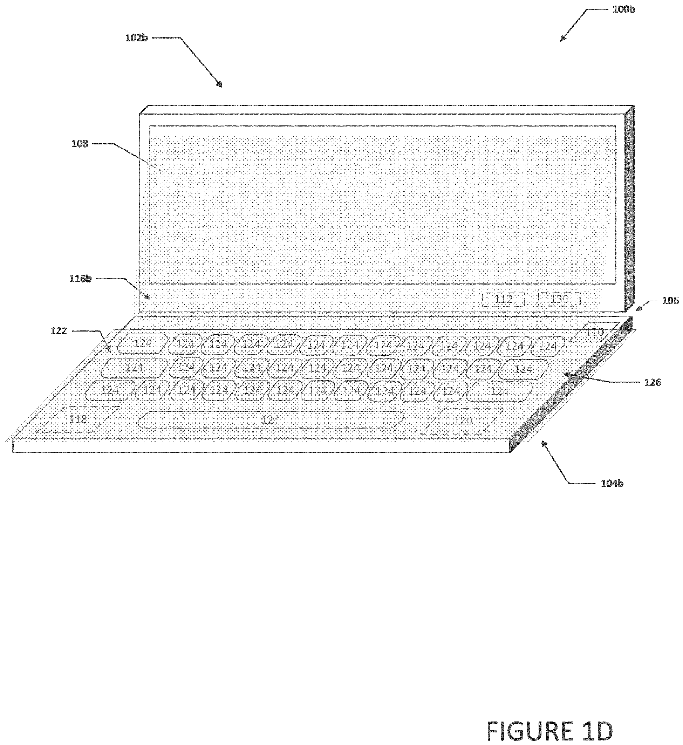

Turning to FIGURES 1C and 1D, FIGURES 1C and 1D are block diagrams of an electronic device 100b that includes keycaps with photoluminescent material, in accordance with an embodiment of the present invention. In an example, the electronic device 100b can include a first housing 102b and a second housing 104b. The first housing 102b can be rotatably or pivotably coupled to the second housing 104b using the hinge 106.

The first housing 102a can include the display 108, the photoluminescent activation engine 112, bezel 116b, and a timing controller (TCON) 130. The TCON 130 is a timing controller on the display side and is responsible for refreshing the display 108 by turning off and on the pixels that will generate an image on the display 108. Most displays refresh at least sixty (60) times per second, even when there is no change in the image because most displays are such that the pixels that create the image on the display will decay away if not refreshed.

The second housing 104a can include the ambient light sensor 110, memory 118, the one or more processors 120, and the keyboard 122. The keyboard 122 includes the plurality of keys 124. One or more of the plurality of keys 124 have a keycap that includes photoluminescent material on at least a portion of the keycap.

The ambient light sensor 110 is configured to measure the ambient light intensity that match the human eye's response to light under a variety of lighting conditions. More specifically, the ambient light sensor 110 can be a photodetector that is used to detect the amount of ambient light present around the electronic device 100b and more specifically, around the keyboard 122. When the ambient light sensor 110 detects that the amount of ambient light is below a threshold (e.g., below one hundred (100) lux), the ambient light sensor 110 can send a signal to the photoluminescent activation engine 112 that the ambient light is below the threshold. The threshold can be a condition or amount of ambient light where a user may have difficulty seeing the keys 124 on the keyboard 122. In response to the signal from the ambient light sensor 110 that the ambient light is below the threshold, the photoluminescent activation engine 112 can send a signal to activate the TCON 130. In response to the signal from the ambient light sensor 110, the TCON 130 inserts one or more photoluminescent activation frames during the refresh cycle of the display 108.

FIGURE 1D illustrates a snapshot in time of when a photoluminescent activation frame has been inserted into the refresh cycle for the display 108 by the TCON 130 and the photoluminescent activation frame is being displayed on the display 108 during the refresh cycle. When the one or more photoluminescent activation frames are inserted into the refresh cycle of the display 108, the one or more photoluminescent activation frames will direct light energy 126 to one or more of the plurality of keys 124. In another example not covered by the claims, the TCON 130 can add a color filter, overlay, etc. to the image on the display and/or increase the intensity of the wavelength of the light energy 126 from the display. The one or more of the plurality of keys 124 include a material that absorbs the light energy 126 and then reimages the light energy back at a higher wavelength. More specifically, the one or more of the plurality of keys 124 include a material that allows the energy absorbed by electrons of the material to be reemitted back at higher wavelength when the electrons of the material return to stable state. This allows the one or more of the plurality of keys 124 to luminesce or become illuminated without the need for an LED backlight. Because the one or more of the plurality of keys 124 are not illuminated with an LED backlight, power can be saved while reducing the key stack height without compromising user experience.

For purposes of illustrating certain example techniques, the following foundational information may be viewed as a basis from which the present disclosure may be properly explained. End users have more media and communications choices than ever before. A number of prominent technological trends are currently afoot (e.g., more computing elements, more online video services, more Internet traffic, more complex processing, etc.), and these trends are changing the expected performance of devices as devices and systems are expected to increase performance and function. One current trend is an illuminated keyboard. An illuminated keyboard includes keys that illuminate to allow the user to more easily see the keys in low light conditions.

Currently, the most common type of illuminated keyboard is one that is backlit with LED lighting. One issue with an LED illuminated keyboard is the relatively large amount of power the illuminated keyboard consumes. For example, some illuminated keyboards that use LED backlight consume about one (1) to about 1.5 watts of power for nominal luminescence. This can reduce the battery power considerably in some systems, especially if the LED backlight is always on. Some systems allow the backlight to be turned off or on but those require user intervention to enable and disable the backlight. In addition, to enable LED backlit keyboards, additional circuitry for the LED backlight is required and the additional circuity adds cost, increases power consumption, and adds an additional layer in the keyboard stack and can affect the total Z-height to the system.

In some systems, the backlight is enabled by the user through special keys and remains on and consuming power until the backlighting is turned off. This drains the system battery as the LED backlight is almost always on and consuming power. Some systems implement automatic control of the backlight based on an ambient light sensor to try and reduce the power consumption as the illuminated keyboard is only backlit and drawing power during low light conditions. In other systems, to try and optimize the power consumption, the backlight is enabled only when the system is powered with AC adaptor. However, the LED backlight still requires the additional circuity and an additional layer in the keyboard stack that can affect the total Z height to the system.

In some systems, the keycaps can include a "glow in the dark" material that has inorganic phosphors to absorb light in the visible and ultra violet wavelengths and then re-emit the absorbed light. Most glow in the dark pigments and materials use a phosphors zinc sulphide. One issue with glow in the dark materials is that the glow fades after time and sometimes will only glow for up to half an hour or less. Typically, the light released by the glow in the dark materials will be brighter immediately after charge and will begin to fade gently as the atoms in the glow in the dark material calm down. In addition, the color of the glow in the dark material is often not appealing to users and can be annoying to some users as it is always in a florescent color, even in well lit conditions. What is needed is a keyboard that includes one or more keys coated with a material that has photoluminescence properties to allow the energy absorbed by electrons of the material to be reemitted back at higher wavelength when the electrons of the material return to stable state.

An electronic device that includes keycaps with photoluminescent material, as outlined in FIGURES 1A and 1B, can resolve these issues (and others). In an example, one or more keys of a keyboard include a material with photoluminescence properties that allow the energy absorbed by electrons of the material to be reemitted back at a higher wavelength when the electrons of the material return to stable state. In a specific example, the keys of the keyboard can be coated with quantum dot material (indium based quantum dot material, graphene based quantum dot material, cadmium based quantum dot material, or some zinc oxide quantum dot material, zinc selenide quantum dot material, zinc sulphide quantum dot material or other zinc-based derivatives, etc.) or some other material similar to the quantum dot material (e.g., a perovskite material, etc.). When the quantum dot material is excited with light energy (e.g., blue light or some other wavelength, depending on the quantum dot material), the energy absorbed by electrons of the quantum dot material will be reemitted back at higher wavelength when the electronics return to stable state.

In an example, when the keys, or more specifically, letters or characters on the keycap of the keys are coated with the quantum dot material, the quantum dot material will absorb the light energy from a display and luminate. This can potentially save cost and power as the need for a backlight LED in the keypad cavity is eliminated. By eliminating the need for a backlight LED, the system can reduce the keyboard stack height. Reducing the keyboard stack height reduces keypress latency in gaming systems and can help improve the user's experience.

The system also includes an ambient light detector. When there is a low ambient light condition (e.g., below one hundred (100) lux), the system detects the low ambient conditions and causes light energy to activate the photoluminescent material. In some examples not covered by the claims, the light energy is from a specific light energy source (e.g., the light source 114). According to the claimed invention, the light energy is from the display and is a frame that has been inserted into the displays refresh cycle. In a specific example, the light energy can be a blue color component in the frames on the display at a particular refresh rate that will excite the quantum dot material periodically to maintain the luminescence.

The quantum dots are light-emitting nanocrystals that absorb light of one wavelength and convert it to another wavelength. More specifically, quantum dots are two (2) to about ten (10) nanometer semiconductor particles that have light emitting properties. They are artificial nanostructures that have varied properties depending on their shape and size. When external stimulus is applied, electrons of the quantum dot material become excited and releases energy in the form of light. The color of the emitted light is dependent on the size of the dot. Larger dots emit a longer wavelength light (red, orange) and smaller dots emit a shorter wavelength light (violet, blue). Blue light in the visible spectrum has higher energy with a wavelength between about four hundred and twenty (420) nm to about four hundred and eighty (480) nm. When a blue light is incident on the quantum dot material, quantum dot crystals in the quantum dot material can break down the light resulting in radiating white light.

The quantum dots material coating on a keycap can be achieved by depositing a layer of solution processed quantum dots film, (e.g., composed of Cd/(Zn, Cd) S quantum dots) on the keycap. In a specific example, the quantum dot phosphor coating can absorb incident blue light and emit white light. By selecting the quantum dot size, it is possible to control the light emission of the quantum dot phosphor coating. In some examples, different excitation wavelengths can be used to create different colors that are reemitted back. In a specific example, the different colors can be used for different characters, letters, symbols, etc. on a single keycap.

In an illustrative example, the quantum dot phosphor is a colloidal solution and can be used in Inkjet like printers. The quantum dot phosphor material can be printed on a keycap to create a quantum dot phosphor coating on the keycap. The ambient light sensor can be placed near the keypad area to detect the ambient light conditions. In a specific example, when a low ambient light condition is detected, one (1) or more blue frames in every refresh cycle of the display can be added to excite the quantum dot phosphor printed on the keycap. When the blue light from display is incident on to the quantum dot phosphor coating on the keycap, the keycap will emit visible light in the form of the character print due to the property of quantum dot phosphor coating. Depending on the screen refresh rate, a minimal number of blue frames can be introduced into a refresh cycle in such a way that no artifacts are visible to the user (e.g., one (1) to two (2) frames per refresh cycle). This eliminates the need of keyboard LED backlight and no additional power and LED circuitry are needed and helps to reduce the keyboard stack height and can help save power.

A typical keyboard stackup has keys and each key has a keycap that is on top of the keys of the keyboard where alphanumeric and special characters are printed. A membrane switch is a multilayered switch device that is touch activated to make or break the electrical connection of a particular switch element. A support plate such as a metal plate is usually on bottom side of keyboard to offer mechanical strength to the structure of the keyboard. LED backlighting illuminates at the back of keycap to make the keypad character visible during low light conditions upon user selection and the additional circuitry for the LED backlight adds to the keyboard stackup and increases the height of the keyboard stackup.

The keyboard stackup plays an important role in gaming like systems and a major source of latency is key travel time. It is not a coincidence that the quickest keyboard measured also has the shortest key travel distance by a large margin. Most switches in the keyboard will start firing before the key is fully depressed, but the key travel time is still significant and can easily add ten (10) ms of delay or more, depending on the switch mechanism. The net delay from the key press to key de-press is often as high as twenty millisecond or more and the delay can be relatively high for gaming systems.

A low latency keyboard is more advantageous for gamers. By implementing a backlight less keyboard that can still allow for illuminated keys, 0.2mm in overall keyboard stackup can be reduced. This will reduce approximately seven percent (7%) latency in a keypress event. In addition, a reduction in the Z-height of the keyboard stackup could help in system design for a thicker battery and more battery capacity.

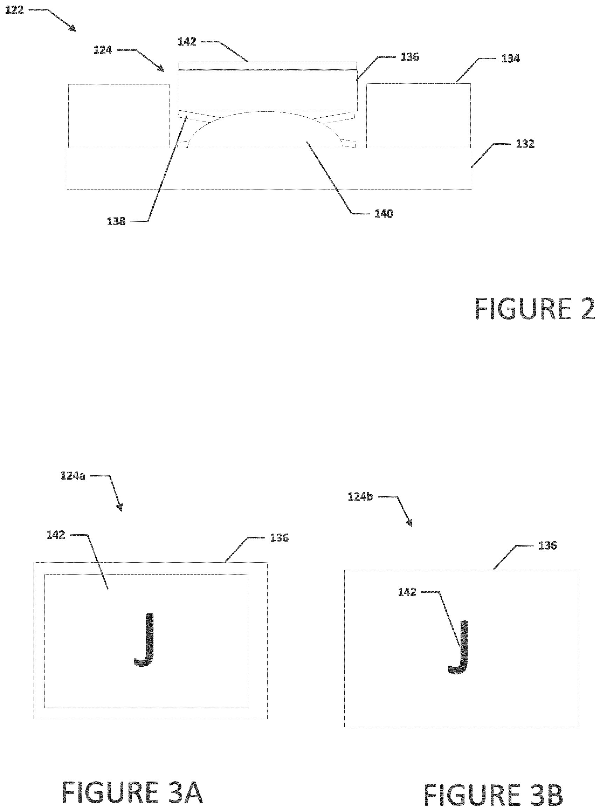

Turning to FIGURE 2, FIGURE 2 is a simplified block diagram of a side view of a portion of the keyboard 122, in accordance with an embodiment of the present disclosure. While a scissor switch key with a dome is shown in FIGURE 2, it should be noted that other types of keys may be used including mechanical keys, membrane keys, optical keys, or any other type of key that has a keycap that can be coated with the photoluminescent material (e.g., a quantum dot phosphor coating). In an example, the keyboard 122 can include a plurality of keys 124, a key support structure 132, and a keyboard housing cover 134. The key support structure 132 can include a keyboard support plate and components and circuitry to allow the user to operate the keyboard (e.g., register a keypress). The keyboard housing cover 134 helps to protect the keys 124 in the keyboard, helps to prevent wobble of the keys, and generally creates an aesthetic appearance for the keyboard 122. In some examples, the keyboard housing cover 134 is not present.

The key 124 can include a keycap 136, support mechanism 138, and keypress register 140. FIGURE 2 illustrates a scissor support mechanism but other support mechanisms can be used. Also, FIGURE 2 illustrates a dome keypress register but other keypress registers can be used. The keycap 136 can include a photoluminescent material coating 142 (e.g., a quantum dot phosphor coating). The photoluminescent material coating 142 can be over a portion of the keycap 136. The photoluminescent material coating 142 can absorb light energy and then reimages the light energy back at a higher wavelength.

Turning to FIGURE 3A, FIGURE 3A is a simplified block diagram of a key 124a, in accordance with an embodiment of the present disclosure. In an example, the key 124a can include the keycap 136 and the photoluminescent material coating 142 (e.g., a quantum dot phosphor coating). As illustrated in FIGURE 3A, the photoluminescent material coating 142 can be over at least a majority of the top of the keycap 136.

Turning to FIGURE 3B, FIGURE 3B is a simplified block diagram of a key 124b, in accordance with an embodiment of the present disclosure. In an example, the key 124b can include the keycap 136 and the photoluminescent material coating 142 (e.g., a quantum dot phosphor coating). As illustrated in FIGURE 3B, the photoluminescent material coating 142 can be over the character, letter, number, symbol, etc. that is on the top of the keycap 136.

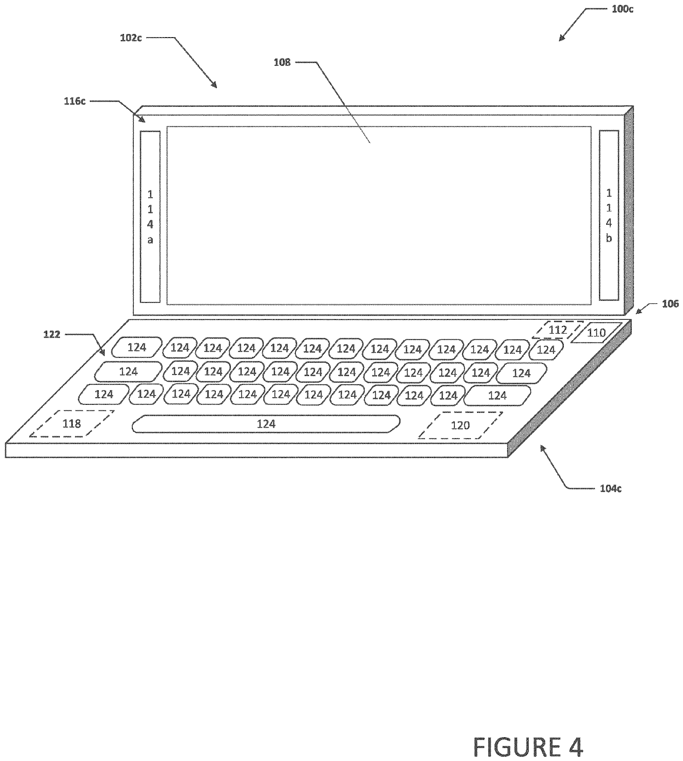

Turning to FIGURE 4, FIGURE 4 is a simplified block diagram of an electronic device 100c that includes keycaps with photoluminescent material, in accordance with an embodiment of the present disclosure. In an example, the electronic device 100c can include a first housing 102c and a second housing 104c. The first housing 102c can be rotatably or pivotably coupled to the second housing 104c using the hinge 106.

The first housing 102c can include the display 108, a first light source 114a, and a second light source 114b. In an example, the first housing 102c can also include a bezel 116c around the display 108. In a specific example, the first light source 114a and the second light source 114b can be part of and/or integrated into the bezel 116c. As illustrated in FIGURE 4, the first light source 114a can be on one side of the display 108 (e.g., the left side) and the second light source 114b can be on the opposite side of the display 108 (e.g., the right side).

The second housing 104c can include the ambient light sensor 110, the photoluminescent activation engine 112, memory 118, one or more processors 120, and the keyboard 122. The keyboard 122 includes the plurality of keys 124. One or more of the plurality of keys 124 can have a keycap that includes photoluminescent material (e.g., a quantum dot phosphor coating) on at least a portion of the keycap.

The ambient light sensor 110 can be configured to measure the ambient light intensity that matches the human eye's response to light under a variety of lighting conditions. More specifically, the ambient light sensor 110 can be a photodetector that is used to detect the amount of ambient light present around the electronic device 100c and more specifically, around the keyboard 122. When the ambient light sensor 110 detects that the amount of ambient light is below a threshold (e.g., below one hundred (100) lux), the ambient light sensor 110 can send a signal to the photoluminescent activation engine 112 that the ambient light is below the threshold. The threshold can be a condition or amount of ambient light where a user may have difficulty seeing the keys 124 on the keyboard 122. In response to the signal from the ambient light sensor 110 that the ambient light is below the threshold, the photoluminescent activation engine 112 can send a signal to activate the first light source 114a and/or the second light source 114b, (e.g., similar to what is illustrated in FIGURE 1B). When the first light source 114a and/or the second light source 114b are activated, the first light source 114a and/or the second light source 114b will direct light energy 126 to one or more of the plurality of keys 124. The one or more of the plurality of keys 124 can include photoluminescent material that absorbs the light energy 126 and then reimages the light energy back at a higher wavelength.

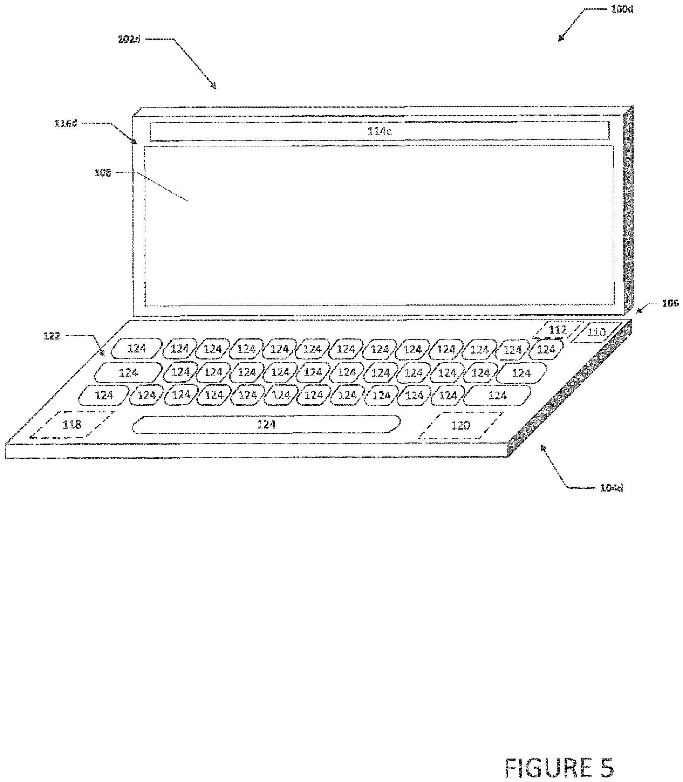

Turning to FIGURE 5, FIGURE 5 is a simplified block diagram of an electronic device 100d that includes keycaps with photoluminescent material, in accordance with an embodiment of the present disclosure. In an example, the electronic device 100d can include a first housing 102d and a second housing 104d. The first housing 102d can be rotatably or pivotably coupled to the second housing 104d using the hinge 106.

The first housing 102d can include the display 108 and a light source 114c. In an example, the first housing 102d can also include a bezel 116d around the display 108. In a specific example, the light source 114c can be part of and/or integrated into the bezel 116d. As illustrated in FIGURE 5, the light source 114c can be above the display 108. However, the location of the light source 114c illustration in FIGURE 5 may cause the light energy from the light source 114c to interfere with the visibility of the image on the display 108 and a user may prefer the light source to be located under the display 108, as illustrated in FIGURE 1A and 1B, or on the sides of the display 108 as illustrated in FIGURE 4.

The second housing 104d can include the ambient light sensor 110, the photoluminescent activation engine 112, memory 118, one or more processors 120, and the keyboard 122. The keyboard 122 includes the plurality of keys 124. One or more of the plurality of keys 124 can have a keycap that includes photoluminescent material e.g., a quantum dot phosphor coating) on at least a portion of the keycap.

The ambient light sensor 110 can be configured to measure the ambient light intensity that matches the human eye's response to light under a variety of lighting conditions. More specifically, the ambient light sensor 110 can be a photodetector that is used to detect the amount of ambient light present around the electronic device 100d and more specifically, around the keyboard 122. When the ambient light sensor 110 detects that the amount of ambient light is below a threshold (e.g., below one hundred (100) lux), the ambient light sensor 110 can send a signal to the photoluminescent activation engine 112 that the ambient light is below the threshold. The threshold can be a condition or amount of ambient light where a user may have difficulty seeing the keys 124 on the keyboard 122. In response to the signal from the ambient light sensor 110 that the ambient light is below the threshold, the photoluminescent activation engine 112 can send a signal to activate the light source 114c (e.g., similar to what is illustrated in FIGURE 1B). When the light source 114c is activated, the light source 114c will direct light energy 126 to one or more of the plurality of keys 124. The one or more of the plurality of keys 124 can include photoluminescent material that absorbs the light energy 126 and then reimages the light energy back at a higher wavelength.

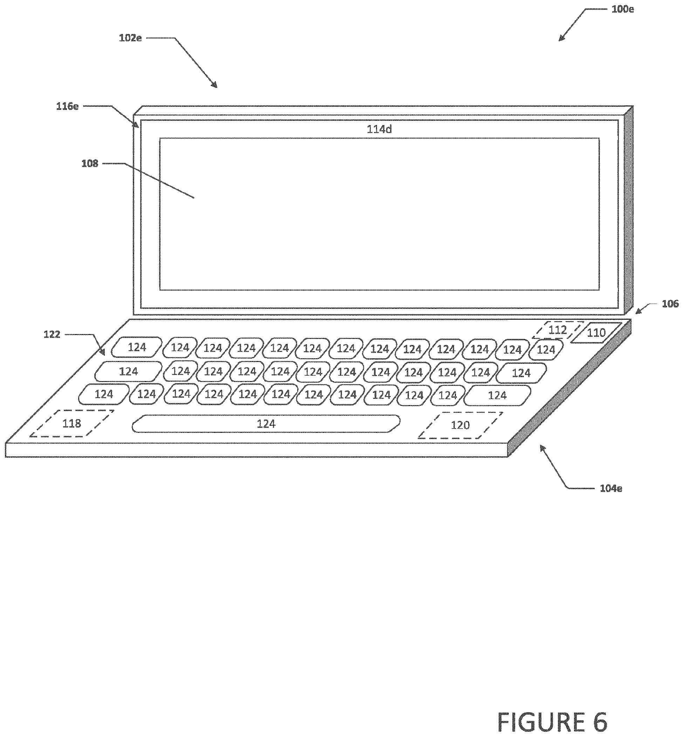

Turning to FIGURE 6, FIGURE 6 is a simplified block diagram of an electronic device 100e that includes keycaps with photoluminescent material, in accordance with an embodiment of the present disclosure. In an example, the electronic device 100e can include a first housing 102e and a second housing 104e. The first housing 102e can be rotatably or pivotably coupled to the second housing 104e using the hinge 106.

The first housing 102e can include the display 108 and a light source 114d. In an example, the first housing 102d can also include a bezel 116e around the display 108. In a specific example, the light source 114d can be part of and/or integrated into the bezel 116e. As illustrated in FIGURE 6, the light source 114c can surround and/or extend around the edges of the display 108. However, the location of the light source 114d illustration in FIGURE 6 may cause the light energy from the light source 114d to interfere with the visibility of the image on the display 108 and a user may prefer the light source to be located under the display 108, as illustrated in FIGURE 1A and 1B, or on the sides of the display 108 as illustrated in FIGURE 4.

The second housing 104e can include the ambient light sensor 110, the photoluminescent activation engine 112, memory 118, one or more processors 120, and the keyboard 122. The keyboard 122 includes the plurality of keys 124. One or more of the plurality of keys 124 can have a keycap that includes photoluminescent material on at least a portion of the keycap.

The ambient light sensor 110 can be configured to measure the ambient light intensity that matches the human eye's response to light under a variety of lighting conditions. More specifically, the ambient light sensor 110 can be a photodetector that is used to detect the amount of ambient light present around the electronic device 100e and more specifically, around the keyboard 122. When the ambient light sensor 110 detects that the amount of ambient light is below a threshold (e.g., below one hundred (100) lux), the ambient light sensor 110 can send a signal to the photoluminescent activation engine 112 that the ambient light is below the threshold. The threshold can be a condition or amount of ambient light where a user may have difficulty seeing the keys 124 on the keyboard 122. In response to the signal from the ambient light sensor 110 that the ambient light is below the threshold, the photoluminescent activation engine 112 can send a signal to activate the light source 114d (e.g., similar to what is illustrated in FIGURE 1B). When the light source 114d is activated, the light source 114d will direct light energy 126 to one or more of the plurality of keys 124. The one or more of the plurality of keys 124 can include photoluminescent material that absorbs the light energy 126 and then reimages the light energy back at a higher wavelength.

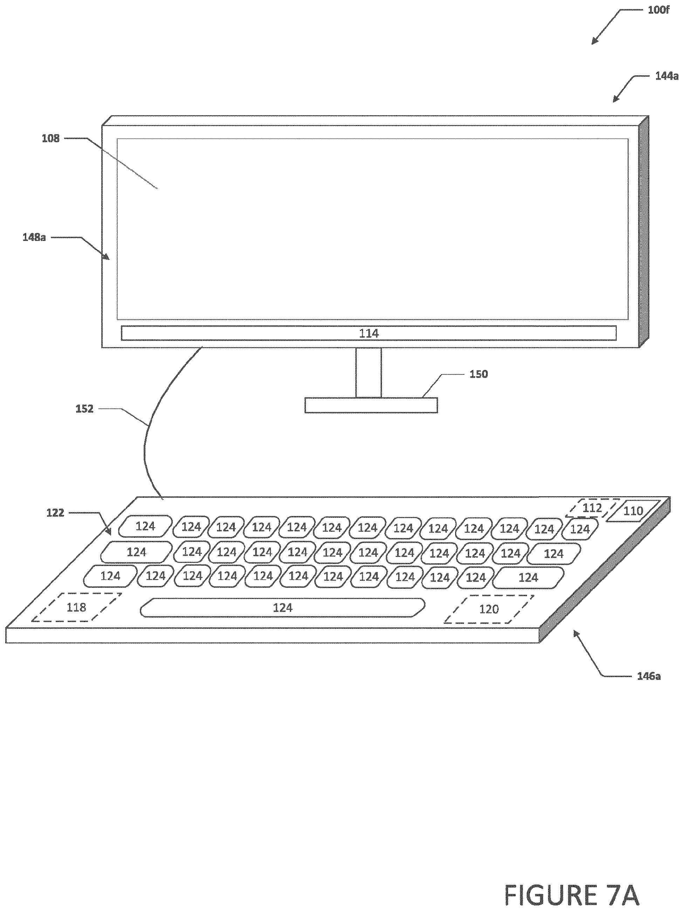

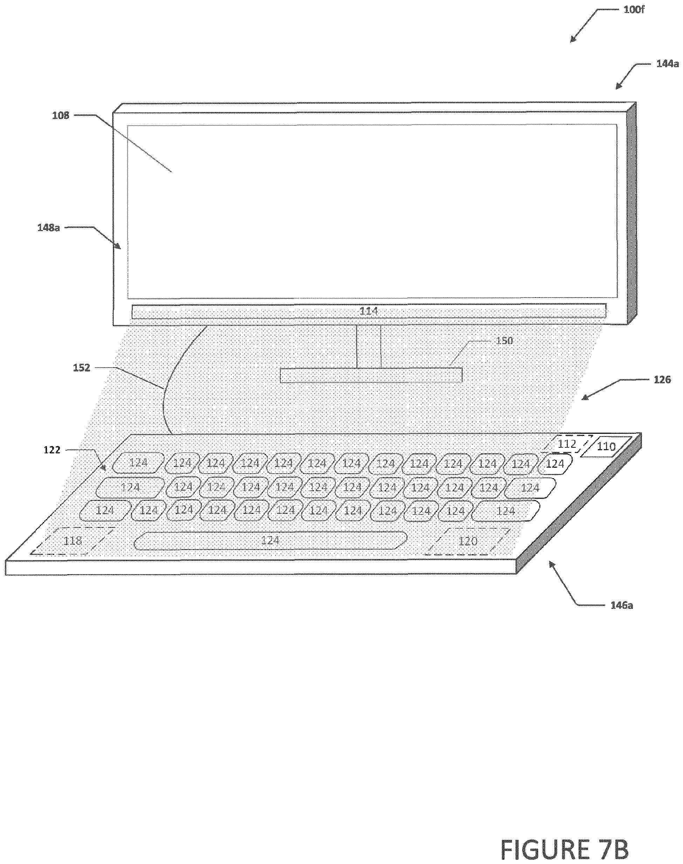

Turning to FIGURES 7A and 7B, FIGURE 7A and 7B are simplified block diagrams of an electronic device 100f that includes keycaps with photoluminescent material, in accordance with an embodiment of the present disclosure. In an example, the electronic device 100f can include a monitor 144a and a peripheral keyboard 146a. The monitor 144a can be a computer monitor, desktop monitor, freestanding display, etc. In some examples, the monitor 144a is supported by a stand 150. The monitor 144a can include the display 108 and the light source 114. In an example, the monitor 144a can also include a monitor bezel 148a around the display 108. In a specific example, the light source 114 can be part of and/or integrated into the monitor bezel 148a.

The peripheral keyboard 146a can include the ambient light sensor 110, the photoluminescent activation engine 112, memory 118, one or more processors 120, and the keyboard 122. The keyboard 122 includes the plurality of keys 124. One or more of the plurality of keys 124 can have a keycap that includes photoluminescent material on at least a portion of the keycap. The peripheral keyboard 146a can be in wireless communication with the monitor 144a or in wired communication with the monitor 144a. For example, as illustrated in FIGURES 7A and 7B, the peripheral keyboard 146a is in communication with the monitor 144a using a wired connection 152.

The ambient light sensor 110 can be configured to measure the ambient light intensity that matches the human eye's response to light under a variety of lighting conditions. More specifically, the ambient light sensor 110 can be a photodetector that is used to detect the amount of ambient light present around the electronic device 100f and more specifically, around the peripheral keyboard 146a. When the ambient light sensor 110 detects that the amount of ambient light is below a threshold (e.g., below one hundred (100) lux), the ambient light sensor 110 can send a signal to the photoluminescent activation engine 112 that the ambient light is below the threshold. The threshold can be a condition or amount of ambient light where a user may have difficulty seeing the keys 124 on the keyboard 122. In response to the signal from the ambient light sensor 110 that the ambient light is below the threshold, the photoluminescent activation engine 112 can send a signal to activate the light source 114, as illustrated in FIGURE 7B. When the light source 114 is activated, the light source 114 will direct light energy 126 to one or more of the plurality of keys 124. The one or more of the plurality of keys 124 can include photoluminescent material that absorbs the light energy 126 and then reimages the light energy back at a higher wavelength. This allows the one or more of the plurality of keys 124 to luminesce or become illuminated without the need for an LED backlight.

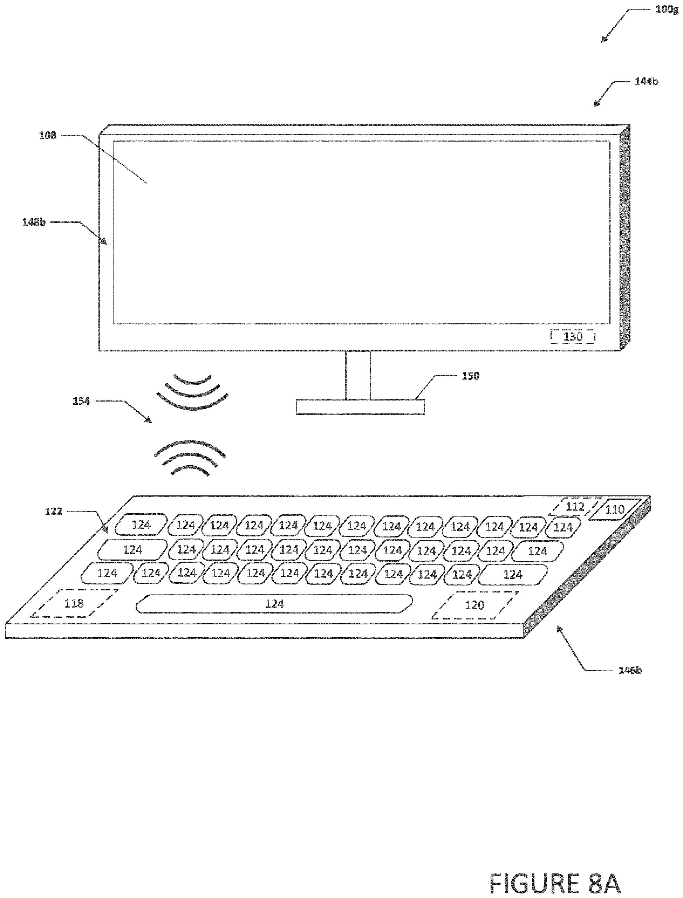

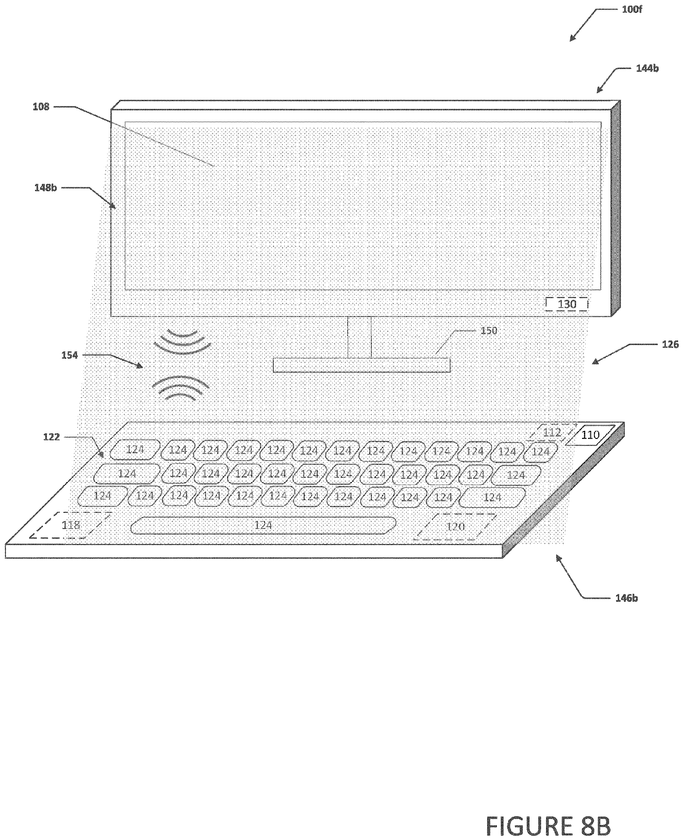

Turning to FIGURES 8A and 8B, FIGURE 8A and 8B are simplified block diagrams of an electronic device 100g that includes keycaps with photoluminescent material, in accordance with an embodiment of the present invention. In an example, the electronic device 100g can include a monitor 144b and a peripheral keyboard 146b. The monitor 144b can be a computer monitor, desktop monitor, freestanding display, etc. In some examples, the monitor 144b is supported by the stand 150. The monitor 144b can include the display 108 and the TCON 130. In an example, the monitor 144b can also include a monitor bezel 148b around the display 108.

The peripheral keyboard 146b can include the ambient light sensor 110, the photoluminescent activation engine 112, memory 118, one or more processors 120, and the keyboard 122. The keyboard 122 includes the plurality of keys 124. One or more of the plurality of keys 124 have a keycap that includes photoluminescent material on at least a portion of the keycap. The peripheral keyboard 146b can be in wireless communication with the monitor 144b or in wired communication with the monitor 144b. For example, as illustrated in FIGURES 8A and 8B, the peripheral keyboard 146b is in communication with the monitor 144b using a wireless connection 154.

The ambient light sensor 110 is configured to measure the ambient light intensity that matches the human eye's response to light under a variety of lighting conditions. More specifically, the ambient light sensor 110 can be a photodetector that is used to detect the amount of ambient light present around the electronic device 100f and more specifically, around the peripheral keyboard 146b. When the ambient light sensor 110 detects that the amount of ambient light is below a threshold (e.g., below one hundred (100) lux), the ambient light sensor 110 can send a signal to the photoluminescent activation engine 112 that the ambient light is below the threshold. The threshold can be a condition or amount of ambient light where a user may have difficulty seeing the keys 124 on the keyboard 122. In response to the signal from the ambient light sensor 110 that the ambient light is below the threshold, the photoluminescent activation engine 112 can send a signal to activate the TCON 130. In response to the signal from the ambient light sensor 110, the TCON 130 inserts one or more photoluminescent activation frames during the refresh cycle of the display 108.

FIGURE 8D illustrates a snapshot in time of when a photoluminescent activation frame has been inserted into the refresh cycle for the display 108 by the TCON 130 and the photoluminescent activation frame is being displayed on the display 108 during a refresh cycle. When the one or more photoluminescent activation frames are inserted into the refresh cycle of the display 108, the one or more photoluminescent activation frames will direct light energy 126 to one or more of the plurality of keys 124. The one or more of the plurality of keys 124 include a material that absorbs the light energy 126 and then reimages the light energy back at a higher wavelength. More specifically, the one or more of the plurality of keys 124 include photoluminescent material that allows the energy absorbed by electrons of the material to be reemitted back at higher wavelength when the electrons of the material return to stable state. This allows the one or more of the plurality of keys 124 to luminesce or become illuminated without the need for an LED backlight.

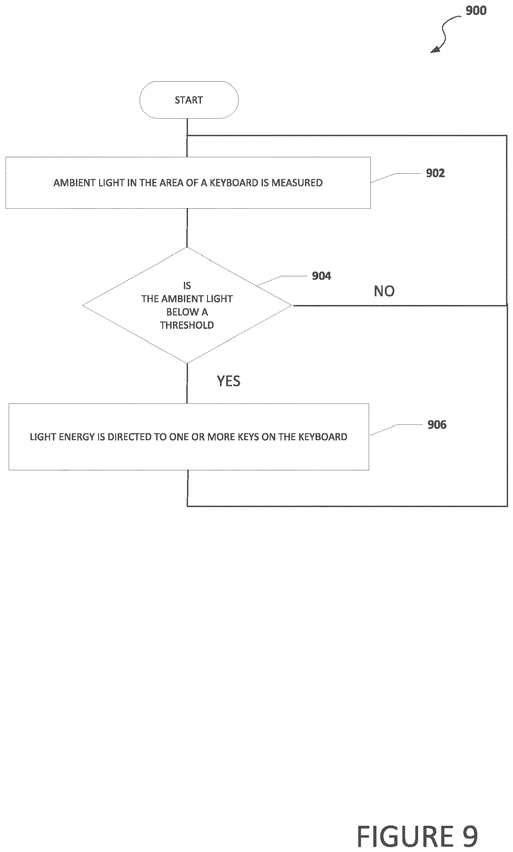

Turning to FIGURE 9, FIGURE 9 is an example flowchart illustrating possible operations of a flow 900 that may be associated with a keycap with photoluminescent material, in accordance with an embodiment of the present invention. In an embodiment, one or more operations of flow 900 may be performed by the ambient light sensor 110, the photoluminescent activation engine 112, the light source 114, and/or the TCON 130. At 902, ambient light in the area of a keyboard is measured. For example, the ambient light sensor 110 on the keyboard 122 or on a housing (e.g., first housing 102b) that includes a display associated with the keyboard can measure the ambient light intensity. At 904, the system determines if the ambient light is below a threshold. For example, the amount of ambient light measured by the ambient light sensor 110 can be communication to the photoluminescent activation engine 112 and the photoluminescent activation engine 112 can determine if the amount of ambient light measured by the ambient light sensor 110 is below a threshold. The threshold can be an amount of ambient light that would make viewing the keys of the keyboard difficult for a user. In an example, the threshold is below about one hundred (100) lux and ranges therein (e.g., below about seventy-five (75) lux, below about fifty (50) lux, or below about twenty (20) lux), depending on design choice, design constraints, and the sensitivity of the user to see in low light conditions. In some examples, the threshold can be set and adjusted by the user.

If the ambient light is not below the threshold, the system returns to 902 and the ambient light in the area of the keyboard is measured. If the ambient light is below the threshold, then light energy is directed to one or more keys on the keyboard, as in 906, and the system returns to 902 and the ambient light in the area of a keyboard is measured. In an example not covered by the claims, if the ambient light is below the threshold and a user might have difficulty view the keys 124 on the keyboard 122, the photoluminescent activation engine 112 can cause the light source 114 to direct the light energy 126 to the keys 124. In accordance with the claimed invention, if the ambient light is below the threshold and a user might have difficulty view the keys 124 on the keyboard 122, the photoluminescent activation engine 112 can communicate with the TCON 130 to insert one or more photoluminescent activation frames during the refresh cycle of the display 108 and direct the light energy 126 to the keys 124. The keys 124 on the keyboard **122** include photoluminescent material that absorbs the light energy 126 and then reimages the light energy back at a higher wavelength. More specifically, the keys 124 include photoluminescent material that allows the energy absorbed by electrons of the material to be reemitted back at higher wavelength when the electrons of the material return to stable state. This allows the one or more of the plurality of keys 124 to luminesce or become illuminated during low ambient light conditions where the user may have trouble viewing the keys 124 without the need for an LED backlight.

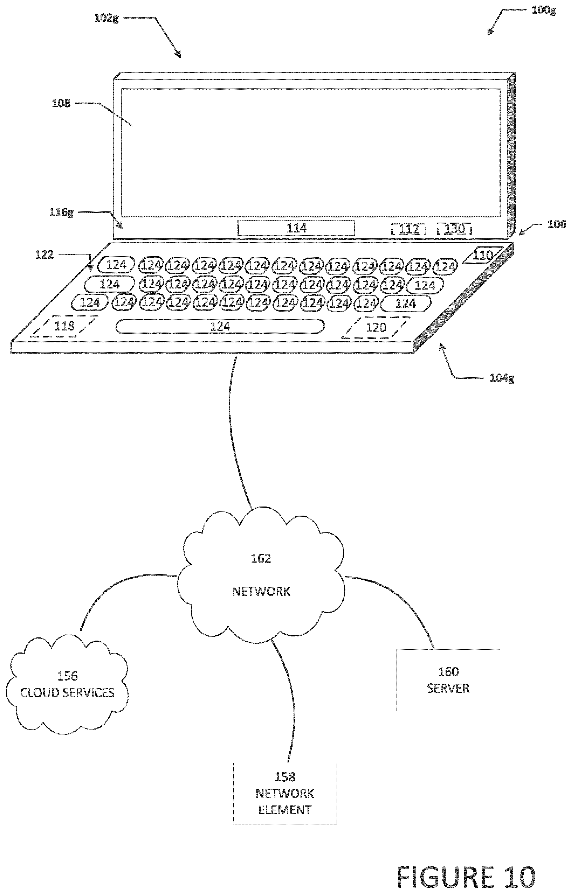

Turning to FIGURE 10, FIGURE 10 is a simplified block diagram of an electronic device 100g that includes keycaps with photoluminescent material, in accordance with an embodiment of the present disclosure. In an example, the electronic device 100g can include a first housing 102g and a second housing 104g. The first housing 102g can be rotatably or pivotably coupled to the second housing 104g using the hinge 106. The first housing 102g can include the display 108, the photoluminescent activation engine 112, the light source 114, and the TCON 130. In an example, the first housing 102a can also include a bezel 116g around the display 108.

The second housing 104a can include the ambient light sensor 110, memory 118, one or more processors 120, and the keyboard 122. The keyboard 122 includes the plurality of keys 124. One or more of the plurality of keys 124 have a keycap that includes photoluminescent material on at least a portion of the keycap that allows the energy absorbed by electrons of the photoluminescent material to be reemitted back at higher wavelength when the electrons of the material return to a stable state. In an example not covered by the claims, the photoluminescent activation engine 112 can cause the light source 114 to direct the light energy 126 to the keys 124. In accordance with the claimed invention, the photoluminescent activation engine 112 can communicate with the TCON 130 to insert one or more photoluminescent activation frames during the refresh cycle of the display 108 and direct the light energy 126 to the keys 124. This allows the one or more of the plurality of keys 124 to luminesce or become illuminated during low ambient light conditions where the user may have trouble viewing the keys 124 without the need for an LED backlight. The electronic device 100g (and electronic devices 100a-100f) may be in communication with cloud services 156, network element 158, and/or server 160 using network 162. In some examples, the electronic device 100g (and electronic devices 100a-100f) may be a standalone device and not connected to network 162.

Elements of FIGURE 10 may be coupled to one another through one or more interfaces employing any suitable connections (wired or wireless), which provide viable pathways for network (e.g., network 162, etc.) communications. Additionally, any one or more of these elements of FIGURE 10 may be combined or removed from the architecture based on particular configuration needs. Network 162 may include a configuration capable of transmission control protocol/Internet protocol (TCP/IP) communications for the transmission or reception of packets in a network. Electronic device 100g may also operate in conjunction with a user datagram protocol/IP (UDP/IP) or any other suitable protocol where appropriate and based on particular needs.

Turning to the network infrastructure of FIGURE 10, network 162 represents a series of points or nodes of interconnected communication paths for receiving and transmitting packets of information. Network 162 offers a communicative interface between nodes, and may be configured as any local area network (LAN), virtual local area network (VLAN), wide area network (WAN), wireless local area network (WLAN), metropolitan area network (MAN), Intranet, Extranet, virtual private network (VPN), and any other appropriate architecture or system that facilitates communications in a network environment, or any suitable combination thereof, including wired and/or wireless communication.

In network 162, network traffic, which is inclusive of packets, frames, signals, data, etc., can be sent and received according to any suitable communication messaging protocols. Suitable communication messaging protocols can include a multi-layered scheme such as Open Systems Interconnection (OSI) model, or any derivations or variants thereof (e.g., Transmission Control Protocol/Internet Protocol (TCP/IP), user datagram protocol/IP (UDP/IP)). Messages through the network could be made in accordance with various network protocols, (e.g., Ethernet, Infiniband, OmniPath, etc.). Additionally, radio signal communications over a cellular network may also be provided. Suitable interfaces and infrastructure may be provided to enable communication with the cellular network.

The term "packet" as used herein, refers to a unit of data that can be routed between a source node and a destination node on a packet switched network. A packet includes a source network address and a destination network address. These network addresses can be Internet Protocol (IP) addresses in a TCP/IP messaging protocol. The term "data" as used herein, refers to any type of binary, numeric, voice, video, textual, or script data, or any type of source or object code, or any other suitable information in any appropriate format that may be communicated from one point to another in electronic devices and/or networks.

Electronic devices 100a-100g may include any suitable hardware, software, components, modules, or objects that facilitate the operations thereof, as well as suitable interfaces for receiving, transmitting, and/or otherwise communicating data or information in a network environment. This may be inclusive of appropriate algorithms and communication protocols that allow for the effective exchange of data or information. Electronic devices 100a-100g may include virtual elements.

In regards to the internal structure, electronic devices 100a-100g can include memory elements for storing information to be used in operations. Electronic devices 100a-100g may keep information in any suitable memory element (e.g., random access memory (RAM), read-only memory (ROM), erasable programmable ROM (EPROM), electrically erasable programmable ROM (EEPROM), application specific integrated circuit (ASIC), etc.), software, hardware, firmware, or in any other suitable component, device, element, or object where appropriate and based on particular needs. Any of the memory items discussed herein should be construed as being encompassed within the broad term 'memory element.' Moreover, the information being used, tracked, sent, or received could be provided in any database, register, queue, table, cache, control list, or other storage structure, all of which can be referenced at any suitable timeframe. Any such storage options may also be included within the broad term 'memory element' as used herein.

In certain example implementations, functions may be implemented by logic encoded in one or more tangible media (e.g., embedded logic provided in an ASIC, digital signal processor (DSP) instructions, software (potentially inclusive of object code and source code) to be executed by a processor, or other similar machine, etc.), which may be inclusive of non-transitory computer-readable media. In some of these instances, memory elements can store data used for operations. This includes the memory elements being able to store software, logic, code, or processor instructions that are executed to carry out operations or activities.

Additionally, electronic devices 100a-100g can include one or more processors that can execute software or an algorithm. In one example, the processors could transform an element or an article (e.g., data) from one state or thing to another state or thing. In another example, activities may be implemented with fixed logic or programmable logic (e.g., software/computer instructions executed by a processor) and the elements identified herein could be some type of a programmable processor, programmable digital logic (e.g., a field programmable gate array (FPGA), an erasable programmable read-only memory (EPROM), an electrically erasable programmable read-only memory (EEPROM)) or an ASIC that includes digital logic, software, code, electronic instructions, or any suitable combination thereof. Any of the potential processing elements, modules, and machines described herein should be construed as being encompassed within the broad term 'processor.'

Implementations of the embodiments disclosed herein may be formed or carried out on or over a substrate, such as a non-semiconductor substrate or a semiconductor substrate. In one implementation, the non-semiconductor substrate may be silicon dioxide, an inter-layer dielectric composed of silicon dioxide, silicon nitride, titanium oxide and other transition metal oxides. Although a few examples of materials from which the non-semiconducting substrate may be formed are described here, any material that may serve as a foundation upon which a non-semiconductor device may be built falls within the spirit and scope of the embodiments disclosed herein.

In another implementation, the semiconductor substrate may be a crystalline substrate formed using a bulk silicon or a silicon-on-insulator substructure. In other implementations, the semiconductor substrate may be formed using alternate materials, which may or may not be combined with silicon, that include but are not limited to germanium, indium antimonide, lead telluride, indium arsenide, indium phosphide, gallium arsenide, indium gallium arsenide, gallium antimonide, orother combinations of group III-V or group IV materials. In other examples, the substrate may be a flexible substrate including 2D materials such as graphene and molybdenum disulphide, organic materials such as pentacene, transparent oxides such as indium gallium zinc oxide poly/amorphous (low temperature of dep) III-V semiconductors and germanium/silicon, and other non-silicon flexible substrates. Although a few examples of materials from which the substrate may be formed are described here, any material that may serve as a foundation upon which a semiconductor device may be built falls within the spirit and scope of the embodiments disclosed herein.

Note that with the examples provided herein, interaction may be described in terms of one, two, three, or more elements. However, this has been done for purposes of clarity and example only. In certain cases, it may be easier to describe one or more of the functionalities by only referencing a limited number of elements. It should be appreciated that electronic devices 100a-100g and their teachings are readily scalable and can accommodate a large number of components, as well as more complicated/sophisticated arrangements and configurations. Accordingly, the examples provided should not limit the scope or inhibit the broad teachings of electronic devices 100a-100g and as potentially applied to a myriad of other architectures.

Although the present disclosure has been described in detail with reference to particular arrangements and configurations, these example configurations and arrangements may be changed significantly without departing from the scope of the present invention as defined by the claims. Moreover, certain components may be combined, separated, eliminated, or added based on particular needs and implementations. Additionally, although electronic devices 100a-100g has been illustrated with reference to particular elements and operations, these elements and operations may be replaced by any suitable architecture, protocols, and/or processes that achieve the intended functionality of electronic devices 100a-100g.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

## Claims

1. An electronic device (100b, 100f) comprising:
a keycap with photoluminescent material;
a light energy source to emit light energy (126), wherein the photoluminescent material is configured to absorb the light energy at a specific wavelength and reemit the light energy at a higher wavelength;
an ambient light sensor (110) to activate the light energy source during low ambient light conditions; and
**characterized by** further comprising a timing controller, TCON, (130) to insert one or more photoluminescent activation frames into a refresh cycle of a display (108), wherein the one or more photoluminescent activation frames are the light energy source.

2. The electronic device of Claim 1, wherein the photoluminescent material is quantum dot material.

3. The electronic device of Claim wherein the light energy emitted by the light energy source has a wavelength that activates quantum dots in the photoluminescent material.

4. The electronic device of any of Claims 1-3, wherein the photoluminescent material covers a majority of a surface of the keycap.

5. The electronic device of any of Claims 1-4, wherein the photoluminescent material covers a character, letter, number, or symbol on a surface of the keycap.

6. The electronic device of any one of claims 1 to 5, further comprising:
a first housing that includes the display; and
a second housing that includes a keyboard comprising the keycap.

7. The electronic device of Claim 6, wherein the ambient light sensor is configured to activate the light energy source when ambient light in an area around the keyboard is below about one hundred lux.

8. A method (900) comprising:
determining (902) an amount of ambient light in an area around a keyboard, wherein the keyboard includes a plurality of keys and each key has a keycap that includes photoluminescent material that is configured to absorb light energy at a specific wavelength and reemit the light energy at a higher wavelength;
when the determined amount of ambient light is below a threshold, activating (906) a light energy source to direct light energy to the keys with the keycap that include the photoluminescent material to activate the photoluminescent material; and
**characterized by** inserting one or more photoluminescent activation frames into a refresh cycle of a display to create the light energy source and activate the photoluminescent material.

## Patentansprüche

1. Elektronische Vorrichtung (100b, 100f), umfassend:
eine Tastenkappe mit photolumineszierendem Material;
eine Lichtenergiequelle zum Emittieren von Lichtenergie (126), wobei das photolumineszierende Material dazu ausgelegt ist, die Lichtenergie mit einer spezifischen Wellenlänge zu absorbieren und die Lichtenergie mit einer höheren Wellenlänge wieder zu emittieren;
einen Umgebungslichtsensor (110) zum Aktivieren der Lichtenergiequelle während geringer Umgebungslichtbedingungen; und
**gekennzeichnet dadurch, dass** sie ferner eine Timing-Steuerung, TCON, (130) umfasst zum Einfügen eines oder mehrerer photolumineszierender Aktivierungsframes in einen Auffrischzyklus einer Anzeige (108), wobei der eine oder die mehreren photolumineszierenden Aktivierungsframes die Lichtenergiequelle sind.

2. Elektronische Vorrichtung nach Anspruch 1, wobei das photolumineszierende Material ein Quantenpunktmaterial ist.

3. Elektronische Vorrichtung nach Anspruch 2, wobei die durch die Lichtenergiequelle emittierte Lichtenergie eine Wellenlänge aufweist, die Quantenpunkte im photolumineszierenden Material aktiviert.

4. Elektronische Vorrichtung nach einem der Ansprüche 1-3, wobei das photolumineszierende Material einen Großteil einer Oberfläche der Tastenkappe bedeckt.

5. Elektronische Vorrichtung nach einem der Ansprüche 1-4, wobei das photolumineszierende Material ein Zeichen, einen Buchstaben, eine Zahl oder ein Symbol auf einer Oberfläche der Tastenkappe bedeckt.

6. Elektronische Vorrichtung nach einem der Ansprüche 1 bis 5, ferner umfassend:
ein erstes Gehäuse, das die Anzeige beinhaltet; und
ein zweites Gehäuse, das eine Tastatur beinhaltet, die die Tastenkappe umfasst.

7. Elektronische Vorrichtung nach Anspruch 6, wobei der Umgebungslichtsensor dazu ausgelegt ist, die Lichtenergiequelle zu aktivieren, wenn Umgebungslicht in einem Bereich rund um die Tastatur unter etwa einhundert Lux liegt.

8. Verfahren (900), umfassend:
Bestimmen (902) einer Menge an Umgebungslicht in einem Bereich rund um eine Tastatur, wobei die Tastatur eine Vielzahl von Tasten beinhaltet und jede Taste eine Tastenkappe aufweist, die photolumineszierendes Material beinhaltet, das dazu ausgelegt ist, Lichtenergie mit einer spezifischen Wellenlänge zu absorbieren und die Lichtenergie mit einer höheren Wellenlänge wieder zu emittieren;
wenn die bestimmte Menge an Umgebungslicht unter einer Schwelle liegt, Aktivieren (906) einer Lichtenergiequelle, um Lichtenergie zu den Tasten mit der Tastenkappe, die das photolumineszierende Material beinhaltet, zu leiten, um das photolumineszierende Material zu aktivieren; und
**gekennzeichnet durch** Einfügen eines oder mehrerer photolumineszierender Aktivierungsframes in einen Auffrischzyklus einer Anzeige, um die Lichtenergiequelle zu erzeugen und das photolumineszierende Material zu aktivieren.

## Revendications

1. Dispositif électronique (100b, 100f) comprenant :
un capuchon de touche doté d'un matériau photoluminescent ;
une source d'énergie lumineuse pour émettre de l'énergie lumineuse (126), le matériau photoluminescent étant configuré pour absorber l'énergie lumineuse à une longueur d'onde spécifique et réémettre l'énergie lumineuse à une longueur d'onde plus élevée ;
un capteur de lumière ambiante (110) pour activer la source d'énergie lumineuse dans des conditions de faible luminosité ambiante ; et
**caractérisé en ce qu'**il comprend en outre un contrôleur de synchronisation, TCON, (130) pour insérer une ou plusieurs trames d'activation photoluminescente dans un cycle de rafraîchissement d'un dispositif d'affichage (108), lesdites trames d'activation photoluminescente constituant la source d'énergie lumineuse.

2. Dispositif électronique selon la revendication 1, dans lequel le matériau photoluminescent est un matériau à points quantiques.

3. Dispositif électronique selon la revendication 2, dans lequel l'énergie lumineuse émise par la source d'énergie lumineuse a une longueur d'onde qui active des points quantiques dans le matériau photoluminescent.

4. Dispositif électronique selon l'une quelconque des revendications 1 à 3, dans lequel le matériau photoluminescent recouvre une majeure partie d'une surface du capuchon de touche.

5. Dispositif électronique selon l'une quelconque des revendications 1 à 4, dans lequel le matériau photoluminescent recouvre un caractère, une lettre, un chiffre ou un symbole sur une surface du capuchon de touche.

6. Dispositif électronique selon l'une quelconque des revendications 1 à 5, comprenant en outre :
un premier boîtier qui comporte le dispositif d'affichage ; et
un second boîtier qui comporte un clavier comprenant le capuchon de touche.

7. Dispositif électronique selon la revendication 6, dans lequel le capteur de lumière ambiante est configuré pour activer la source d'énergie lumineuse lorsque la lumière ambiante dans une zone entourant le clavier est inférieure à environ cent lux.

8. Procédé (900) comprenant :
la détermination (902) d'une quantité de lumière ambiante dans une zone entourant un clavier, le clavier comprenant une pluralité de touches et chaque touche ayant un capuchon de touche qui comporte un matériau photoluminescent qui est configuré pour absorber une énergie lumineuse à une longueur d'onde spécifique et réémettre l'énergie lumineuse à une longueur d'onde plus élevée ;
lorsque la quantité de lumière ambiante déterminée est inférieure à un seuil, l'activation (906) d'une source d'énergie lumineuse pour diriger de l'énergie lumineuse vers les touches dotées du capuchon de touche qui comporte le matériau photoluminescent afin d'activer le matériau photoluminescent ; et
**caractérisé par** l'insertion d'une ou plusieurs trames d'activation photoluminescente dans un cycle de rafraîchissement d'un dispositif d'affichage pour créer la source d'énergie lumineuse et activer le matériau photoluminescent.
